# EUROPÄISCHE PATENTSCHRIFT

(11) **EP 3 265 713 B1**
(45) Veröffentlichungstag und Bekanntmachung des Hinweises auf die Patenterteilung: **28.11.2018**
(21) Anmeldenummer: 16718990.1
(22) Anmeldetag: 26.02.2016
(51) Int. Cl.: F16L 37/088

(54) **STECKVERBINDERBAUGRUPPE ZUM VERBINDEN VON LEITUNGEN**
PLUG-IN CONNECTOR ASSEMBLY FOR THE CONNECTION OF LINES
ENSEMBLE DE RACCORD ENFICHABLE SERVANT À RACCORDER DES CONDUITS

(30) Priorität: 03.03.2015 AT 501652015
(43) Veröffentlichungstag der Anmeldung: 10.01.2018
(73) Patentinhaber: Henn GmbH & Co KG., 6850 Dornbirn (AT)
(72) Erfinder: HARTMANN, Harald, 6850 Dornbirn (AT); HUBMANN, Christian, 6845 Hohenems (AT)
(74) Vertreter: Burger, Hannes
(86) Internationale Anmeldenummer: PCT/AT2016/050045
(87) Internationale Veröffentlichungsnummer: WO 2016/138548

(56) Entgegenhaltungen:
- WO-A1-2011/106805
- DE-A1- 19 623 448
- US-A1- 2005 136 741

## Beschreibung

Die Erfindung betrifft eine Steckverbinderbaugruppe zum Verbinden von Leitungen für unter Druck gesetzte Fluide.

Eine gattungsgemäße Steckverbinderbaugruppe ist aus der AT 509 561 B1 bekannt, welche eine Steckverbinderaufnahme und einen in die Steckverbinderaufnahme einsteckbaren Steckverbinder zeigt. Um ein Einstecken des Steckverbinders in die Steckverbinderaufnahme verhindern zu können ist ein Sperrkörper vorgesehen, welcher in eine Aufnahmeaussparung in der Steckverbinderaufnahme einsetzbar ist.

Eine weitere Steckverbinderbaugruppe ist aus der AT 512 397 B1 bekannt.

Aus der DE 196 23 448 A1 und der WO 2011/106805 A1 sind weitere Steckverbinderbaugruppen bekannt.

Der vorliegenden Erfindung liegt die Aufgabe zugrunde eine Steckverbinderbaugruppe zu schaffen, welche die Möglichkeit bietet den Steckverbinder bedarfsweise gegen Relativverdrehung zur Steckverbinderaufnahme zu sichern.

Diese Aufgabe der Erfindung wird durch die Merkmale gemäß Anspruch 1 gelöst.

Erfindungsgemäß ist eine Steckverbinderbaugruppe zum Verbinden von Leitungen für unter Druck gesetzte Fluide ausgebildet. Die Steckverbinderbaugruppe umfasst eine Steckverbinderaufnahme mit einer an einer Einsteckseite angeordneten Einstecköffhung, in welcher Einstecköffnung eine Aufnahmeaussparung angeordnet ist. Weiters umfasst die Steckverbinderbaugruppe einen Steckverbinder mit einem Einsteckabschnitt welcher in die Einstecköffnung der Steckverbinderaufnahme einsteckbar ist, wobei die Einstecköffnung der Steckverbinderaufnahme im mit dem Steckverbinder verbundenen Zustand den Einsteckabschnitt des Steckverbinders zumindest abschnittsweise umgibt. Außerdem umfasst die Steckverbinderbaugruppe eine Rastfeder, welche an der Steckverbinderaufnahme angeordnet ist und in einer geschlossenen Position mit zumindest einem Halteabschnitt in eine in einer Außenseite des Steckverbinders radial umlaufenden Nut eingreift, sodass ein Loslösen des in die Steckverbinderaufnahme eingesteckten Steckverbinders unterbunden ist. Darüber hinaus ist ein Verdrehsicherungselement in die Aufnahmeaussparung der Steckverbinderaufnahme einsteckbar und fixiert in dieser aufnehmbar. Der Steckverbinder weist an dessen Außenseite eine in Längsrichtung verlaufende Verdrehsicherungsnut auf, welche mit dem Verdrehsicherungselement eine Nut-Feder-Verbindung bildet, sodass der Steckverbinder relativ zur Steckverbinderaufnahme verdrehgesichert ist.

Ein Vorteil der erfindungsgemäßen Ausbildung der Steckverbinderbaugruppe liegt darin, dass das Verdrehsicherungselement wahlweise in die Steckverbinderaufnahme eingesetzt werden kann. Ist ein Verdrehsicherungselement in die Steckverbinderaufnahme eingesetzt, so kann erreicht werden, dass dieses zusammen mit dem Steckverbinder eine Nut-Feder-Verbindung bildet und somit die Winkellage des Steckverbinders relativ zur Steckverbinderaufnahme vorherbestimmbar und fixierbar ist. Ein Vorteil der Ausbildung einer Verdrehsicherungsnut im Steckverbinder liegt darin, dass der Steckverbinder gut in einem Prozess zur Massenfertigung hergestellt werden kann, wobei die Verdrehsicherungsnut einfach in den Steckverbinder einzubringen ist. Außerdem können relativ hohe Drehmomente über die Verdrehsicherungsnut bzw. das in der Steckverbinderaufnahme eingebrachte Verdrehsicherungselement übertragen werden. Darüber hinaus können Steckverbinder mit oder ohne Verdrehsicherungsnut durch nur geringfügige Änderung des Herstellungswerkzeuges hergestellt werden.

Weiters kann es zweckmäßig sein, dass die Aufnahmeaussparung in der Einstecköffnung der Steckverbinderaufnahme in Form einer in Längsrichtung verlaufenden T-Förmigen Nut ausgebildet ist, wobei das Verdrehsicherungselement an der Einsteckseite der Steckverbinderaufnahme in die Aufnahmeaussparung einführbar und formschlüssig in dieser aufnehmbar ist. Von Vorteil ist hierbei, dass das Verdrehsicherungselement einfach in die T-Förmige Nut eingesetzt werden kann. Durch die mittels der T-Förmigen Nut erreichten formschlüssigen Verbindung zwischen Steckverbinderaufnahme und Verdrehsicherungselement, kann das Verdrehsicherungselement möglichst fest in der Steckverbinderaufnahme gehalten werden.

Ferner kann vorgesehen sein, dass das Verdrehsicherungselement einen Rastvorsprung aufweist und durch Verschiebung in Längsrichtung in einer Rastposition in der Aufnahmeaussparung fixierbar ist. Von Vorteil ist hierbei, dass das Verdrehsicherungselement durch den Rastvorsprung gegen Herausfallen aus der Steckverbinderaufnahme gesichert werden kann. Außerdem wird durch den Rastvorsprung beim Einsetzen des Verdrehsicherungselementes in die Steckverbinderaufnahme ein Feedback über das Erreichen des Verdrehsicherungselementes der korrekten Endlage bzw. Rastposition an den Benutzer gegeben.

Darüber hinaus kann vorgesehen sein, dass in der Aufnahmeaussparung der Steckverbinderaufnahme ein Einlegeelement angeordnet ist, welches mit dem Rastvorsprung des Verdrehsicherungselementes zusammenwirkt und als Rastvorsprunggegenstück dient. Von Vorteil ist hierbei, dass durch das Einlegeelement die genaue Rastposition bestimmt werden kann bzw. dass durch das Einlegeelement die Haltekraft bzw. die Einrastkraft des Verdrehsicherungselementes bestimmt werden kann.

Vorteilhaft ist auch eine Ausprägung, gemäß welcher vorgesehen sein kann, dass das Einlegeelement aus einem Kunststoffmaterial gebildet ist. Ein Einlegeelement aus einem Kunststoffmaterial kann in einem Produktionsprozess zur Serienfertigung einfach und kostengünstig hergestellt werden. Darüber hinaus weist ein Einlegeelement aus einem Kunststoffmaterial gute Elastizitätseigenschaften auf, wodurch es sich gut für den Einsatz in einer Rastpositionierung eignet.

Ferner kann es zweckmäßig sein, dass das Verdrehsicherungselement aus einem Blechumformteil ausgebildet ist. Von Vorteil ist hierbei, dass das Verdrehsicherungselement gut in einem Prozess zur Massenfertigung hergestellt werden kann. Darüber hinaus weist ein Verdrehsicherungselement, welches als Blechumformteil ausgebildet ist, eine hohe Festigkeit auf, sodass die Gefahr des Brechens des Verdrehsicherungselementes vermindert wird.

Darüber hinaus kann vorgesehen sein, dass das Verdrehsicherungselement als Napf mit Flansch ausgebildet ist. Von Vorteil ist hierbei, dass sich das Verdrehsicherungselement dadurch gut in die Steckverbinderaufnahme einsetzen lässt und dass sich das Verdrehsicherungselement möglichst einfach handhaben lässt. Außerdem kann ein derartiges Verdrehsicherungselement gut in einem Tiefziehverfahren hergestellt werden.

Weiters kann vorgesehen sein, dass die Steckverbinderaufnahme aus einem Blechumformteil gebildet ist, wobei die Aufnahmeaussparung durch eine Ausstanzung gebildet ist. Von Vorteil ist hierbei, dass die Steckverbinderaufnahme somit eine hohe Festigkeit aufweisen kann und einfach herstellbar ist.

Darüber hinaus kann vorgesehen sein, dass die Aufnahmeaussparung teilweise in einer Innenwandung bzw. in einer Stirnwandung der Steckverbinderaufnahme ausgebildet ist somit die T-Förmige Nut zwischen Innenwandung und Außenwandung der Steckverbinderaufnahme ausgebildet ist. Von Vorteil ist hierbei, dass eine derartige T-Förmige Nut einfach ausgebildet sein kann.

Schließlich kann vorgesehen sein, dass die Steckverbinderaufnahme als integraler Bestandteil eines Fahrzeugschalldämpfers ausgebildet ist. Von Vorteil ist hierbei, dass der Fahrzeugschalldämpfer dadurch über eine direkte Anschlussmöglichkeit eines Steckverbinders verfügt.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer Steckverbinderbaugruppe in Explosionsdarstellung;
- Fig. 2: eine Seitenansicht der Steckverbinderbaugruppe in zusammengebauter Darstellung;
- Fig. 3: einen Querschnitt Steckverbinderbaugruppe in zusammengebauter Darstellung, insbesondere gemäß der Schnittlinie III-III aus Fig. 2;
- Fig. 4: eine perspektivische Ansicht eines Verdrehsicherungselementes mit teilweiser Schnittdarstellung;
- Fig. 5: eine Ansicht von unten auf das Verdrehsicherungselement;
- Fig. 6: eine perspektivische Ansicht der Steckverbinderbaugruppe mit teilweiser Schnittdarstellung, wobei der Steckverbinder nicht dargestellt ist;
- Fig. 7: eine perspektivische Ansicht der Einbausituation der Steckverbinderbaugruppe.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

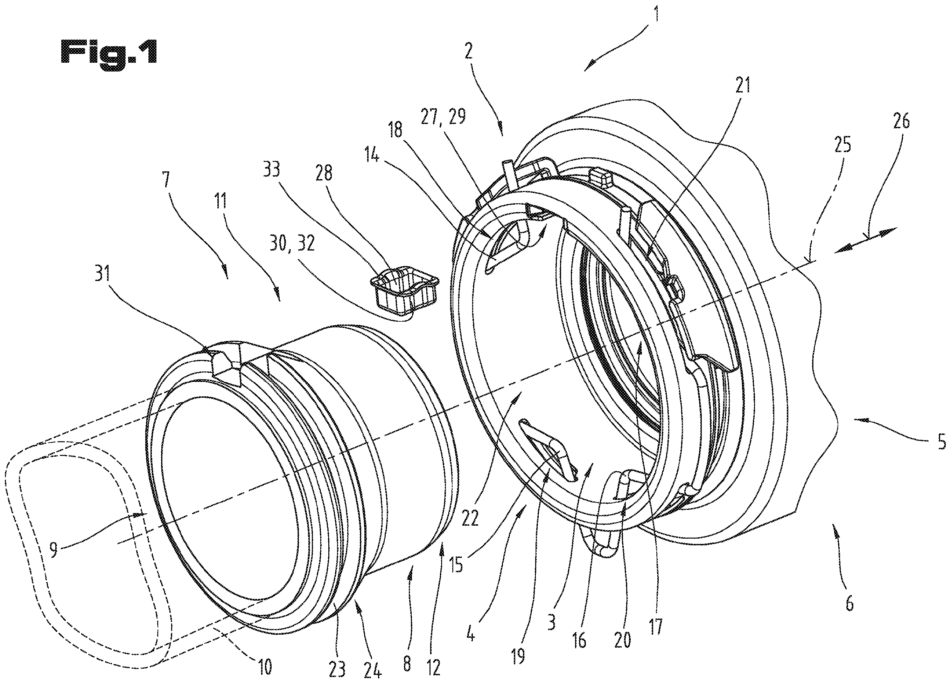

Fig.1 zeigt eine perspektivische Ansicht einer Steckverbinderbaugruppe 1, wobei diese in einem nicht verbundenen Zustand dargestellt ist, sodass die einzelnen Bauteile Beziehungsweise deren Zusammengehörigkeit gezeigt werden kann.

Die Steckverbinderbaugruppe 1 umfasst eine Steckverbinderaufnahme 2 mit einer Einstecköffnung 3, welche an einer Einsteckseite 4 angeordnet ist. Eine der Einsteckseite 4 axial gegenüberliegende Leitungsseite 5 kann verschiedenartig ausgebildet sein.

Beispielsweise ist denkbar, dass an der Leitungsseite 5 eine Druckleitung zum Führen eines Fluids, insbesondere eines unter Druck gesetzten Fluids angeordnet ist.

In einer Alternativvariante kann auch vorgesehen sein, dass an der Leitungsseite 5 ein Fahrzeugschalldämpfer 6 angeordnet ist, oder dass die Steckverbinderaufnahme 2 als integraler Bestandteil eines Fahrzeugschalldämpfers 6 ausgebildet ist.

Eine derartige Steckverbinderbaugruppe 1 kann beispielsweise in einem Kraftfahrzeug im Ladeluftstrang eingesetzt werden.

Weiters umfasst die Steckverbinderbaugruppe 1 einen Steckverbinder 7 mit einem Einsteckabschnitt 8 und einer axial gegenüberliegenden Befestigungsseite 9. An der Befestigungsseite 9 des Steckverbinders 7 kann beispielsweise ein elastischer Verbindungsschlauch 10 angeordnet bzw. am Steckverbinder 7 fixiert sein.

Alternativ dazu kann vorgesehen sein, dass der Steckverbinder 7 an dessen Befestigungsseite 9 starr mit einem Bauteil in der Druckluftkette, wie etwa einem Turbolader verbunden ist.

Der Steckverbinder 7 ist mit seinem Einsteckabschnitt 8 in die Einstecköffnung 3 der Steckverbinderaufnahme 2 einsteckbar. Um diesen Einsteckvorgang zu erleichtern, kann vorgesehen sein, dass an dem Einsteckabschnitt 8 des Steckverbinders 7 an einer Außenseite 11 eine Schräge 12 ausgebildet ist.

Um den in die Steckverbinderaufnahme 2 eingesteckten Steckverbinder 7 in der Steckverbinderaufnahme 2 arretieren zu können, sodass ein Loslösen des Steckverbinders 7 von der Steckverbinderaufnahme 2 unterbunden ist, ist im Steckverbinder 7 eine Rastfeder 13 angeordnet, welche mit dem Steckverbinder 7 in Eingriff gebracht werden kann.

Hierbei vorgesehen sein, dass die Rastfeder 13 zumindest einen Fixierabschnitt aufweist, welcher in der geschlossenen Position der Rastfeder 13 mit dem Steckverbinder 7 in eingriff steht und somit ein Loslösen verhindert.

Insbesondere kann wie aus Fig. 1 ersichtlich, vorgesehen sein, dass in einer geschlossenen Position der Rastfeder 13 mehrere Befestigungsabschnitte 14, 15, 16, 17 jeweils durch einen radial in einem Teilabschnitt der Steckverbinderaufnahme 2 umlaufenden Schlitz 18, 19, 20, 21 in einen Innenbereich 22 der Steckverbinderaufnahme 2 hinein ragen und somit mehrere Halteabschnitte ausbilden.

Mit den Befestigungsabschnitten 14, 15, 16, 17 korrespondierend ist an der Außenseite 11 des Steckverbinders 7 eine zumindest bereichsweise radial umlaufende Nut 23 ausgebildet, welche bei einem vollständig in die Steckverbinderaufnahme 2 eingesteckten Steckverbinder 7 in einer Ebene mit den Schlitzen 18, 19, 20, 21 der Steckverbinderaufnahme 2 liegt. Dadurch können die Befestigungsabschnitte 14, 15, 16, 17 der geschlossenen Rastfeder 13 durch die Schlitze 18, 19, 20, 21 hindurch in die zumindest bereichsweise radial umlaufende Nut 23 des Steckverbinders 7 eingreifen. Somit ist ein Loslösen des in die Steckverbinderaufnahme 2 eingesteckten, Steckverbinders 7 unterbunden.

Dass die Nut 23 zumindest bereichsweise ausgebildet ist, bedeutet dass diese beispielsweise nur im Bereich der Befestigungsabschnitte 14, 15, 16, 17 ausgebildet sein kann und der Rest des Steckverbinders 7 nicht als Nut 23 ausgebildet ist. Alternativ dazu kann vorgesehen sein, dass die Nut 23 zur Gänze am Steckverbinder 7 umlaufend ausgebildet ist.

Zwischen dem Einsteckabschnitt 8 und der Nut 23 des Steckverbinders 7 kann unmittelbar vor der Nut 23 eine radial umlaufende Anlaufschräge 24 für die Befestigungsabschnitte 14, 15, 16, 17 der Rastfeder 13 ausgebildet sein, welche Anlaufschräge 24 insbesondere eine Seitenwand der Nut 23 bilden kann und welche Anlaufschräge 24 die Befestigungsabschnitte 14, 15, 16, 17 der geschlossenen Rastfeder 13 beim Einstecken des Steckverbinders 7 in die Steckverbinderaufnahme 2 radial auseinanderbewegt bzw. auseinanderdrückt, sodass ein Einstecken des Steckverbinders 7 in die Steckverbinderaufnahme 2 ermöglicht ist.

Durch die Rastfeder 13 kann der Steckverbinder 7 gegen Verschiebung entlang einer parallel zur Mittelachse 25 verlaufenden Längsrichtung 26 relativ zur Steckverbinderaufnahme 2 gesichert werden. Eine Relativverdrehung bezüglich der Mittelachse 25 des Steckverbinders 7 und der Steckverbinderaufnahme 2 zueinander kann durch die Rastfeder 13 nicht unterbunden werden.

Um auch eine Relativverdrehung zwischen Steckverbinder 7 und Steckverbinderaufnahme 2 bezüglich der Mittelachse 25 unterbinden zu können, ist vorgesehen, dass in der Einstecköffnung 3 der Steckverbinderaufnahme 2 eine Aufnahmeaussparung 27 angeordnet ist, welche ein Verdrehsicherungselement 28 eingesetzt werden kann. Die Aufnahmeaussparung 27 kann insbesondere im Innenbereich 22 der Einstecköffnung 3 angeordnet sein. Weiters kann vorgesehen sein, dass die Aufnahmeaussparung 27 als T-Förmige Nut 29 ausgebildet ist.

Um das Verdrehsicherungselement 28 durch Verschiebung in Längsrichtung 26 in die Aufnahmeaussparung 27 einsetzen zu können, kann vorgesehen sein, dass die Aufnahmeaussparung 27 an der Einsteckseite 4 offen ist, sodass das Verdrehsicherungselement 28 eingeschoben werden kann.

Das Verdrehsicherungselement 28 weist einen Verdrehsicherungskörper 30 auf, welcher mit einer Verdrehsicherungsnut 31 im Steckverbinder 7 zusammenwirkt. Das Verdrehsicherungselement 28 kann als Blechumformteil ausgebildet sein, insbesondere kann vorgesehen sein, dass der Verdrehsicherungskörper 30 in Form eines Napfes 32 ausgebildet ist und dass an diesen ein umlaufender oder zumindest teilweise umlaufender Flansch 33 angeschlossen ist. Der Flansch 33 ist dazu ausgebildet, um in die T-Förmige Nut 29 eingeschoben zu werden und somit eine formschlüssige Verbindung zwischen T-Förmiger Nut 29 und Verdrehsicherungselement 28 zu bilden.

Die einzelnen Bauteile, insbesondere Steckverbinderaufnahme 2, Steckverbinder 7 und Verdrehsicherungselement 28, sind in Fig. 1 in einer Explosionsansicht dargestellt, wobei sie durch Verschiebung in Längsrichtung 26 miteinander gefügt werden können.

Um das Verdrehsicherungselement 28 in die Aufnahmeaussparung 27 einsetzen zu können, kann vorgesehen sein, dass die Verwendung eines hierfür geeigneten Werkzeuges notwendig ist.

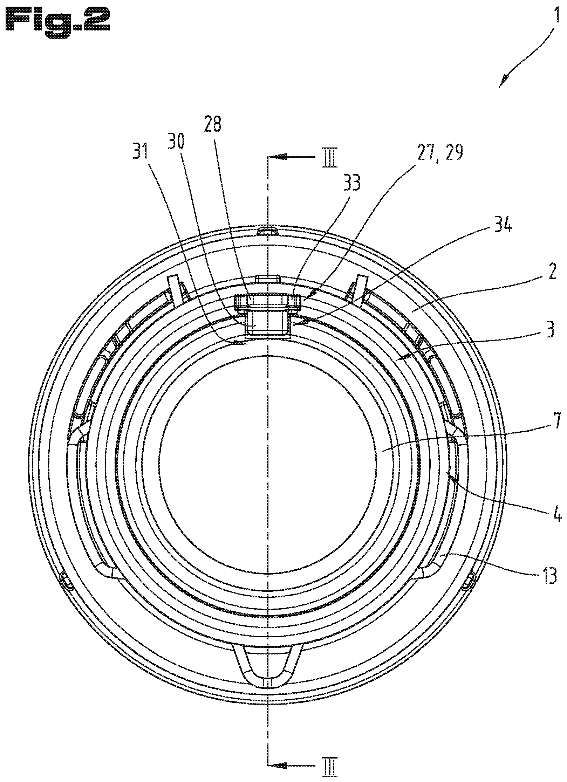

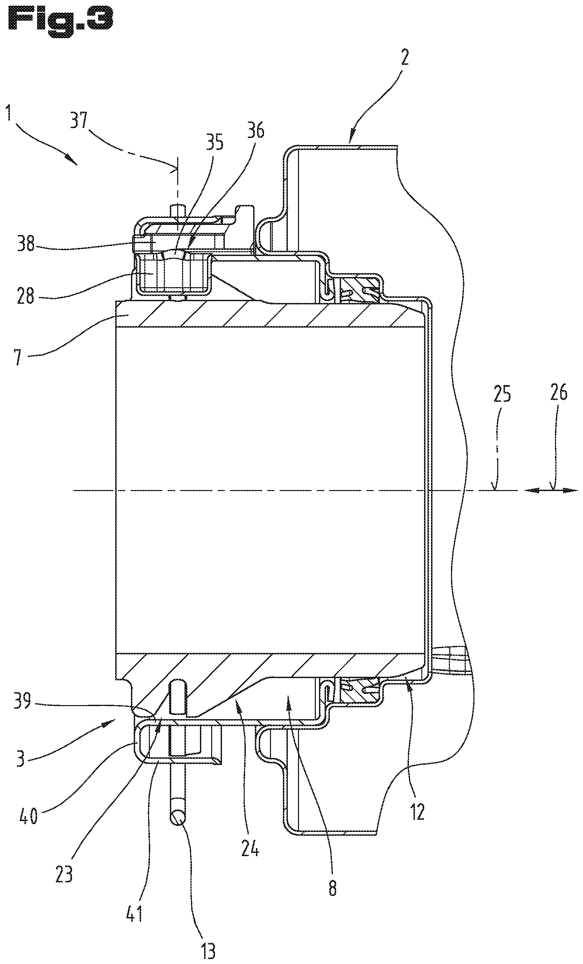

In den Figuren 2 und 3 ist eine weitere und gegebenenfalls für sich eigenständige Ausführungsform der Steckverbinderbaugruppe 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Fig. 2 zeigt eine Seitenansicht der Steckverbinderbaugruppe 1 wobei diese in Ansicht auf die Einsteckseite 4 dargestellt ist. Die Steckverbinderbaugruppe 1 ist hierbei in einem zusammengefügten Zustand dargestellt. Wie aus dieser Verbindung gut ersichtlich, bildet das Verdrehsicherungselement 28 zusammen mit der Verdrehsicherungsnut 31, welche im Steckverbinder 7 angeordnet ist, eine Nut-Feder-Verbindung 34, durch welche eine Relativverdrehung zwischen Steckverbinderaufnahme 2 und Steckverbinder 7 unterbunden werden kann.

Fig. 3 zeigt die Steckverbinderbaugruppe 1 in einem Querschnitt, insbesondere gemäß der Schnittlinie III - III nach Fig. 2.

In Fig. 3 ist die Steckverbinderbaugruppe 1 im zusammengebauten Zustand dargestellt, wobei das Verdrehsicherungselement 28 und der Steckverbinder 7 in die Steckverbinderaufnahme 2 eingesteckt sind. Hierbei ist ersichtlich, dass vorgesehen sein kann, dass das Verdrehsicherungselement 28 einen Rastvorsprung 35 aufweisen kann, welcher mit einem Rastvorsprunggegenstück 36 korrespondiert und somit in einer Rastposition 37 fixiert werden kann. Die Ausbildung eines Rastvorsprungs 35 kann dazu dienen, dass das Verdrehsicherungselement 28, wenn es in die Aufnahmeaussparung 27 eingesteckt ist, in dieser möglichst ortsfest positioniert ist.

Weiters kann vorgesehen sein, dass die Steckverbinderaufnahme 2 ein Einlegeelement 38 umfasst, durch welches das Rastvorsprunggegenstück 36 ausgebildet wird. Das Einlegeelement 38 kann vorzugsweise aus einem thermoplastischen Kunststoff, wie etwa PP gebildet sein. Das Einlegeelement 38 kann hierbei beispielsweise durch ein Spritzgussverfahren hergestellt werden.

Insbesondere kann vorgesehen sein, dass die Steckverbinderaufnahme 2 im Bereich der Einstecköffnung 3 eine Innenwandung 39 und um 90° abgewinkelt daran anschließend eine Stirnwandung 40 und an diese um 90° abgewinkelt anschließend eine Außenwandung 41 aufweist. Die Außenwandung 41 ist somit um 180° zur Innenwandung 39 umgeschlagen.

Das Einlegeelement 38 kann zwischen Innenwandung 39 und Außenwandung 41 angeordnet sein, wobei die Aufnahmeaussparung 27 teilweise in der Innenwandung 39 bzw. in der Stirnwandung 40 ausgebildet ist und die T-Förmige Nut 29 zusammen mit dem Einlegeelement 38 gebildet werden kann.

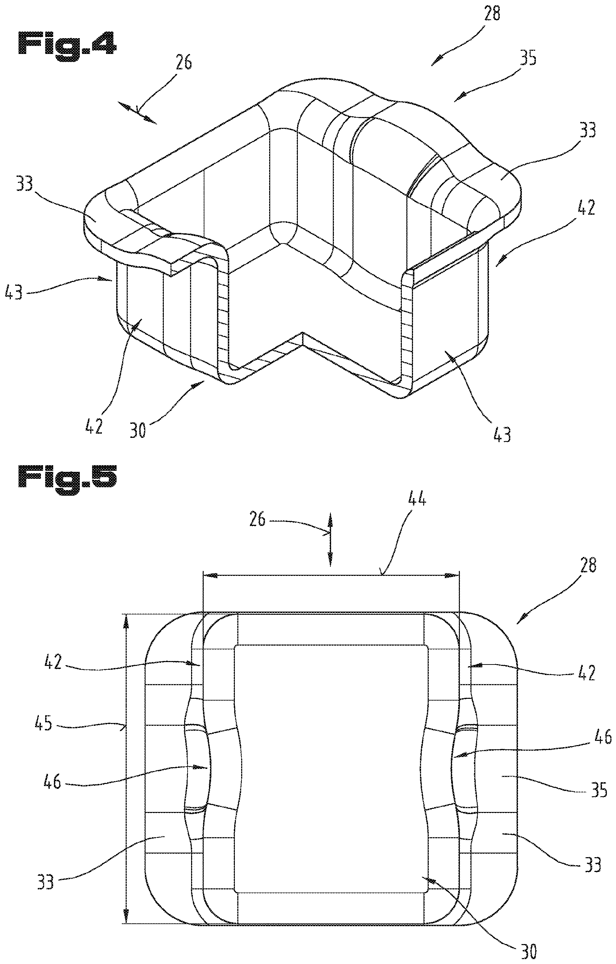

Fig. 4 zeigt eine perspektivische Ansicht einer möglichen Ausführungsform des Verdrehsicherungselementes 28, wobei dieses teilweise geschnitten dargestellt ist. Durch die Orientierung der Längsrichtung 26 ist die Lage des Verdrehsicherungselementes 28 dargestellt. Die Seitenflächen 42 stehen im verbauten Zustand mit der Verdrehsicherungsnut 31 im Eingriff. Die Stirnflächen 43 sind der Einsteckseite 4 bzw. der Leitungsseite 5 der Steckverbinderaufnahme 2 zugewandt.

Wie aus Fig. 4 ersichtlich, kann vorgesehen sein, dass im Bereich der Seitenflächen 42 ein Flansch 33 ausgebildet ist, mittels welchen das Verdrehsicherungselement 28 formschlüssig in der T-Förmigen Nut 29 aufgenommen wird.

Der Flansch 33 kann entweder nur im Bereich der Seitenflächen 42 ausgebildet sein oder aber ist es in einer Alternativvariante auch denkbar, dass der Flansch 33 als umlaufender Flansch ausgebildet ist.

Wie in Fig. 4 weiters besonders gut ersichtlich, kann vorgesehen sein, dass der Rastvorsprung 35 am Flansch 33 ausgebildet ist bzw. an diesem angreift. Der Rastvorsprung 35 kann hierbei in Form einer Wölbung am Flansch 33 ausgebildet sein.

Fig. 5 zeigt eine Ansicht von unten auf das Verdrehsicherungselement 28. Wie aus Fig. 5 ersichtlich, weist der Verdrehsicherungskörper 30 eine Breite 44 und eine Länge 45 auf. Die Breite 44 des Verdrehsicherungskörpers 30 ist hierbei an die Breite der Verdrehsicherungsnut 31 angepasst. Vorzugsweise ist die Breite 44 des Verdrehsicherungskörpers 30 so gewählt, dass das Verdrehsicherungselement 28 eine Spielpassung mit der Verdrehsicherungsnut 31 bildet, sodass das Verdrehsicherungselement 28 leichtgängig in Längsrichtung 26 der Verdrehsicherungsnut 31 verschoben werden kann.

Wie aus Fig. 5 weiters ersichtlich, kann vorgesehen sein, dass im Bereich der Seitenflächen 42 eine Verjüngung 46 ausgebildet ist.

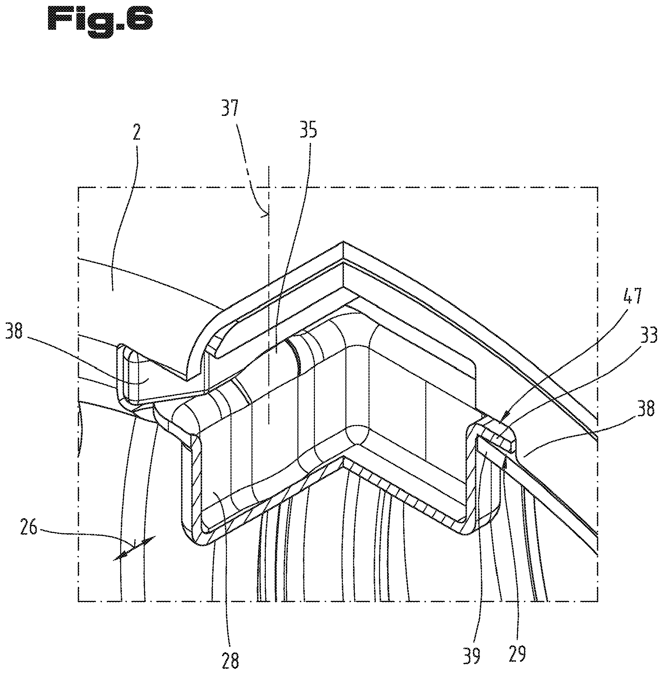

Fig. 6 zeigt eine perspektivische Ansicht der Steckverbinderbaugruppe 1 in welcher das Verdrehsicherungselement 28 bereits eingefügt bzw. verbaut ist. Der Steckverbinder 7 ist in dieser Ansicht aus Gründen der Übersichtlichkeit nicht dargestellt. Die Steckverbinderaufnahme 2 bzw. das Verdrehsicherungselement 28 sind teilweise geschnitten dargestellt.

Das Verdrehsicherungselement 28 befindet sich in der Darstellung in Fig. 6 in seiner Rastposition 37. Wie in Fig. 6 gut ersichtlich, ist das Verdrehsicherungselement 28 in der T-Förmigen Nut 29 der Steckverbinderaufnahme 2 aufgenommen, wobei die T-Förmige Nut 29 innenseitig durch die Innenwandung 39 und außenseitig durch das Einlegeelement 38 begrenzt wird. Der hierdurch entstehende Zwischenraum 47 dient zur Aufnahme des Flansches 33, wodurch sich eine formschlüssige Verbindung zwischen Verdrehsicherungselement 28 und Steckverbinderaufnahme 2 ergibt. Darüber hinaus wird das Verdrehsicherungselement 28 durch den Rastvorsprung 35 in Längsrichtung 26 fixiert, sodass es nicht aus der Steckverbinderaufnahme 2 herausfallen kann.

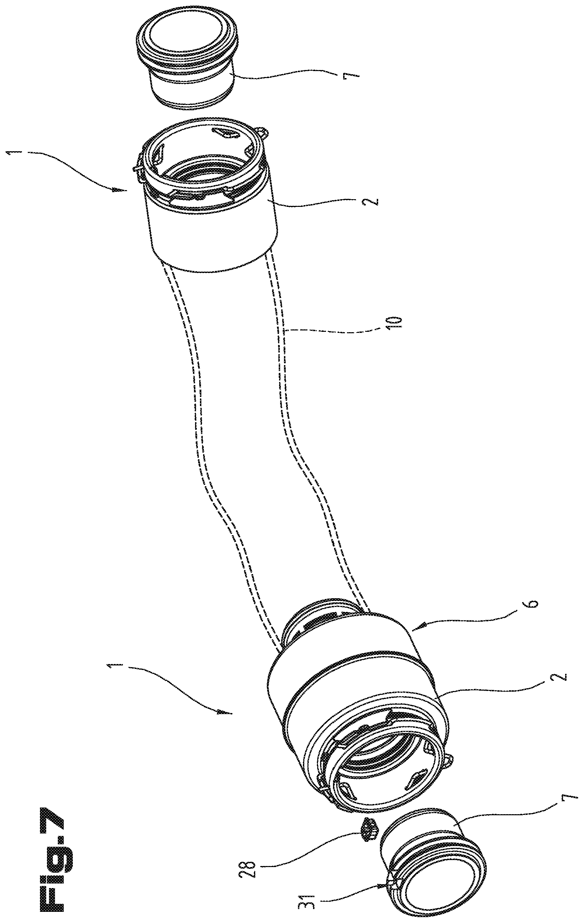

Fig. 7 zeigt eine mögliche Einbausituation einer Steckverbinderbaugruppe 1 in einem Kraftfahrzeug.

Wie aus Fig. 7 ersichtlich, kann vorgesehen sein, dass jeweils eine Steckverbinderaufnahme 2 an beiden Enden eines Verbindungsschlauches 10 angeordnet sind. Zusätzlich kann vorgesehen sein, dass eine der Steckverbinderaufnahmen 2 oder beide Steckverbinderaufnahmen 2 als integraler Bestandteil eines Fahrzeugschalldämpfers 6 ausgebildet ist/sind. Die einer oder beide Steckverbinder 7 können starr mit einem Bauteil des Druckluftstranges verbunden sein.

Um den Verbindungsschlauch 10 mit den beiden daran angeschlossenen Steckverbinderaufnahmen 2 gegen ungewolltes Verdrehen sichern zu können, kann vorgesehen sein, dass in einer der beiden Steckverbinderaufnahmen 2 das Verdrehsicherungselement 28 eingesetzt ist. Wie in Fig. 7 dargestellt, kann das Verdrehsicherungselement 28 beispielsweise in der Steckverbinderaufnahme 2 mit dem Fahrzeugschalldämpfer 6 eingesetzt sein.

Dadurch dass das Verdrehsicherungselement 28 nur in einem der Steckverbinder 2 eingesetzt ist, kann vermieden werden, dass es zu einer inneren Verspannung des Verbindungsschlauches 10 kommt. Dies wird dadurch erreicht, dass jene Steckverbinderaufnahmen 2, in welcher das Verdrehsicherungselement 28 nicht eingesetzt ist, sich frei zum damit korrespondierenden Steckverbinder 7 verdrehen kann.

Zusätzlich kann vorgesehen sein, dass nur einer der beiden Steckverbinder 7 eine Verdrehsicherungsnut 31 auwfeist. Da eine Steckverbinderaufnahme 2 in welchem das Verdrehsicherungselement 28 eingesetzt ist, nur mit einem Steckverbinder 7 verbunden werden kann, welcher eine Verdrehsicherungsnut 31 aufweist, kann somit auch die Orientierung des Verbindungsschlauches 10 eindeutig festgelegt werden. Würde man versuchen eine Steckverbinderaufnahme 2 in welcher ein Verdrehsicherungselement 28 eingesetzt ist, mit einem Steckverbinder 7 ohne Verdrehsicherungsnut 31 zu fügen, so würde das Verdrehsicherungselement 28 mit der radial umlaufenden Anlaufschräge 24 des Steckverbinders 7 kollidieren und ein Ineinanderfügen wäre nicht möglich.

Somit kann durch die vorliegende Ausgestaltung des Verdrehsicherungselementes 28 bzw. der Steckverbinderbaugruppe 1 erreicht werden, dass ein Verbindungsschlauch 10 winkellagerichtig und orientierungsrichtig in einem Kraftfahrzeug verbaut werden kann.

Die Ausführungsbeispiele zeigen mögliche Ausführungsvarianten der Steckverbinderbaugruppe 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1, 2 bis 3, 4, 5, 6, 7 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Steckverbinderbaugruppe 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Steckverbinderbaugruppe | 31 | Verdrehsicherungsnut |
| 2 | Steckverbinderaufnahme | 32 | Napf |
| 3 | Einstecköffnung | 33 | Flansch |
| 4 | Einsteckseite | 34 | Nut-Feder-Verbindung |
| 5 | Leitungsseite | 35 | Rastvorsprung |
| 6 | Fahrzeugschalldämpfer | 36 | Rastvorsprunggegenstück |
| 7 | Steckverbinder | 37 | Rastposition |
| 8 | Einsteckabschnitt | 38 | Einlegeelement |
| 9 | Befestigungsseite | 39 | Innenwandung |
| 10 | Verbindungsschlauch | 40 | Stirnwandung |
| 11 | Außenseite Steckverbinder | 41 | Außenwandung |
| 12 | Schräge | 42 | Seitenfläche |
| 13 | Rastfeder | 43 | Stirnfläche |
| 14 | erster Befestigungsabschnitt | 44 | Breite |
| 15 | zweiter Befestigungsabschnitt | 45 | Länge |
| 16 | dritter Befestigungsabschnitt | 46 | Verjüngung |
| 17 | vierter Befestigungsabschnitt | 47 | Zwischenraum |
| 18 | erster Schlitz | | |
| 19 | zweiter Schlitz | | |
| 20 | dritter Schlitz | | |
| 21 | vierter Schlitz | | |
| 22 | Innenbereich | | |
| 23 | radial umlaufende Nut | | |
| 24 | radial umlaufende Anlaufschräge | | |
| 25 | Mittelachse | | |
| 26 | Längsrichtung | | |
| 27 | Aufnahmeaussparung | | |
| 28 | Verdrehsicherungselement | | |
| 29 | T-Förmige Nut | | |
| 30 | Verdrehsicherungskörper | | |

## Patentansprüche

1. Steckverbinderbaugruppe (1) zum Verbinden von Leitungen für unter Druck gesetzte Fluide, umfassend:
eine Steckverbinderaufnahme (2) mit einer an einer Einsteckseite (4) angeordneten Einstecköffnung (3), in welcher Einstecköffnung (3) eine Aufnahmeaussparung (27) angeordnet ist;
einen Steckverbinder (7) mit einem Einsteckabschnitt (8) welcher in die Einstecköffnung (3) der Steckverbinderaufnahme (2) einsteckbar ist, wobei die Einstecköffnung (3) der Steckverbinderaufnahme (2) im mit dem Steckverbinder (7) verbundenen Zustand den Einsteckabschnitt (8) des Steckverbinders (7) zumindest abschnittsweise umgibt;
eine Rastfeder (13), welche an der Steckverbinderaufnahme (2) angeordnet ist und in einer geschlossenen Position mit zumindest einem Halteabschnitt in eine in einer Außenseite (11) des Steckverbinders (7) zumindest bereichsweise radial umlaufenden Nut (23) eingreift, sodass ein Loslösen des in die Steckverbinderaufnahme (2) eingesteckten Steckverbinders (7) unterbunden ist,
wobei ein Verdrehsicherungselement (28) in die Aufnahmeaussparung (27) der Steckverbinderaufnahme (2) einsteckbar und fixiert in dieser aufnehmbar ist und der Steckverbinder (7) an dessen Außenseite (11) eine in Längsrichtung (26) verlaufende Verdrehsicherungsnut (31) aufweist, welche mit dem Verdrehsicherungselement (28) eine Nut-Feder-Verbindung (34) bildet, sodass der Steckverbinder (7) relativ zur Steckverbinderaufnahme (2) verdrehgesichert ist
**dadurch gekennzeichnet, dass** die Aufnahmeaussparung (27) an der Einsteckseite (4) offen ist, und dass das Verdrehsicherungselement (28) durch Verschiebung in Längsrichtung (26) in die Aufnahmeaussparung (27) einsetzbar ist.

2. Steckverbinderbaugruppe nach Anspruch 1, **dadurch gekennzeichnet, dass** die Aufnahmeaussparung (27) in der Einstecköffnung (3) der Steckverbinderaufnahme (2) in Form einer in Längsrichtung (26) verlaufenden T-Förmigen Nut (29) ausgebildet ist, wobei das Verdrehsicherungselement (28) an der Einsteckseite (4) der Steckverbinderaufnahme (2) in die Aufnahmeaussparung (27) einführbar und formschlüssig in dieser aufnehmbar ist.

3. Steckverbinderbaugruppe nach Anspruch 1 oder 2, **dadurch gekennzeichnet, dass** das Verdrehsicherungselement (28) einen Rastvorsprung (35) aufweist und durch Verschiebung in einer parallel zur Mittelachse (25) verlaufenden Längsrichtung (26) in einer Rastposition (37) in der Aufnahmeaussparung (27) fixierbar ist.

4. Steckverbinderbaugruppe nach Anspruch 3, **dadurch gekennzeichnet, dass** in der Aufnahmeaussparung (27) der Steckverbinderaufnahme (2) ein Einlegeelement (38) angeordnet ist, welches mit dem Rastvorsprung (35) des Verdrehsicherungselementes (28) zusammenwirkt und als Rastvorsprunggegenstück (36) dient.

5. Steckverbinderbaugruppe nach Anspruch 4, **dadurch gekennzeichnet, dass** das Einlegeelement (38) aus einem Kunststoffmaterial gebildet ist.

6. Steckverbinderbaugruppe nach einem der vorhergehenden Ansprüche, **dadurch gekennzeichnet, dass** das Verdrehsicherungselement (28) aus einem Blechumformteil ausgebildet ist.

7. Steckverbinderbaugruppe nach einem der vorhergehenden Ansprüche, **dadurch gekennzeichnet, dass** das Verdrehsicherungselement (28) als Napf (32) mit Flansch (33) ausgebildet ist.

8. Steckverbinderbaugruppe nach einem der vorhergehenden Ansprüche, **dadurch gekennzeichnet, dass** die Steckverbinderaufnahme (2) aus einem Blechumformteil gebildet ist, wobei die Aufnahmeaussparung (27) durch eine Ausstanzung gebildet ist.

9. Steckverbinderbaugruppe nach Anspruch 2, **dadurch gekennzeichnet, dass** die Aufnahmeaussparung (27) teilweise in einer Innenwandung (39) bzw. in einer Stirnwandung (40) der Steckverbinderaufnahme (2) ausgebildet ist somit die T-Förmige Nut (29) zwischen Innenwandung (39) und Außenwandung (41) der Steckverbinderaufnahme (2) ausgebildet ist.

10. Steckverbinderbaugruppe nach einem der vorhergehenden Ansprüche, **dadurch gekennzeichnet, dass** die Steckverbinderaufnahme (2) als integraler Bestandteil eines Fahrzeugschalldämpfers (6) ausgebildet ist.

## Claims

1. Plug-in connector assembly (1) for connecting lines for pressurized fluids, comprising:
a plug-in connector receptacle (2) having a plug-in opening (3) arranged on a plug-in side (4), in which plug-in opening (3) a receiving cut-out (27) is arranged;
a plug-in connector (7) with a plug-in section (8) which can be plugged into the plug-in opening (3) of the plug-in connector receptacle (2), and wherein, when assembled with the plug-in connector (7), the plug-in opening (3) of the plug-in connector receptacle (2) surrounds at least certain regions of the plug-in section (8) of the plug-in connector (7);
a locking spring (13) which is arranged on the plug-in connector receptacle (2) and locates in a groove (23), which extends radially at least in certain regions, on an outer side (11) of the plug-in connector (7) by means of at least one retaining section in a closed position, thereby preventing the plug-in connector (7) inserted in the plug-in connector receptacle (2) from working loose,
wherein an anti-rotation element (28) can be plugged into the receiving cut-out (27) of the plug-in connector receptacle (2) and can be accommodated therein in a fixed manner, and the plug-in connector (7) has on its outer side (11) an anti-rotation groove (31) extending in the longitudinal direction (26) which forms, together with the anti-rotation element (28), a groove-spring connection (34) such that the plug-in connector (7) is secured against rotation relative to the plug-in connector receptacle (2)
**characterized in that** the receiving cut-out (27) is open on the plug-in side (4), and **in that** the anti-rotation element (28) can be inserted into the receiving cut-out (27) by pushing in the longitudinal direction (26).

2. Plug-in connector assembly according to claim 1, **characterized in that** the receiving cut-out (27) in the plug-in opening (3) of the plug-in connector receptacle (2) is constructed in the form of a T-shaped groove (29) extending in the longitudinal direction (26), wherein the anti-rotation element (28) can be inserted in the receiving cut-out (27) on the plug-in side (4) of the plug-in connector receptacle (2) and accommodated therein in a form-fitting manner.

3. Plug-in connector assembly according to claim 1 or 2, **characterized in that** the anti-rotation element (28) has a locking projection (35) and can be secured in a locking position (37) in the receiving cut-out (27) when pushed in a longitudinal direction (26) extending parallel to the central axis (25).

4. Plug-in connector assembly according to claim 3, **characterized in that** an insert element (38) is arranged in the receiving cut-out (27) of the plug-in connector receptacle (2) which co-operates with the locking projection (35) of the anti-rotation element (28) and acts as a locking projection counterpart (36).

5. Plug-in connector assembly according to claim 4, **characterized in that** the insert element (38) is made from a plastic material.

6. Plug-in connector assembly according to one of the preceding claims, **characterized in that** the anti-rotation element (28) is constructed from a formed sheet metal part.

7. Plug-in connector assembly according to one of the preceding claims, **characterized in that** the anti-rotation element (28) is constructed as a cup (32) with a flange (33).

8. Plug-in connector assembly according to one of the preceding claims, **characterized in that** the plug-in connector receptacle (2) is formed from a formed sheet metal part, wherein the receiving cut-out (27) is formed by a punching process.

9. Plug-in connector assembly according to claim 2, **characterized in that** the receiving cut-out (27) is partially formed in an internal wall (39) and/or in an end wall (40) of the plug-in connector receptacle (2), and the T-shaped groove (29) is therefore formed between the internal wall (39) and external wall (41) of the plug-in connector receptacle (2).

10. Plug-in connector assembly according to one of the preceding claims, **characterized in that** the plug-in connector receptacle (2) is constructed as an integral part of an automotive muffler (6).

## Revendications

1. Sous-ensemble de connecteur (1) pour la liaison de conduites pour des fluides sous pression, comprenant :
un logement de connecteur (2) avec une ouverture d'enfichage (3) disposée sur un côté d'enfichage (4), dans laquelle ouverture d'enfichage (3) est disposé un évidement de logement (27),
un connecteur (7) avec une partie d'enfichage (8) qui peut être enfichée dans l'ouverture d'enfichage (3) du logement de connecteur (2), l'ouverture d'enfichage (3) du logement de connecteur (2) entourant, dans l'état relié avec le connecteur (7), la partie d'enfichage (8) du connecteur (7) au moins à certains endroits ;
un ressort d'encliquetage (13) qui est disposé sur le logement de connecteur (2) et qui s'emboîte, dans une position fermée, avec au moins une partie de maintien dans une rainure (23) s'étendant radialement, au moins à certains endroits, dans un côté extérieur (11) du connecteur (7), de façon à empêcher un détachement du connecteur (7) enfiché dans le logement de connecteur (2),
un élément anti-rotation (28) pouvant être enfiché dans l'évidement de logement (27) du logement de connecteur (2) et logé de manière fixe dans celui-ci et le connecteur (7) comprenant, sur son côté extérieur (11), une rainure anti-rotation (31) s'étendant la direction longitudinale (26), qui forme, avec l'élément anti-rotation (28), une liaison par rainure et languette (34) de façon à ce que le connecteur (7) soit sécurisé contre une rotation par rapport au logement de connecteur (2),
**caractérisé en ce que** l'évidement de logement (27) est ouvert sur le côté d'enfichage (4) et **en ce que** l'élément anti-rotation (28) peut être inséré dans l'évidement de logement (27) par coulissement dans la direction longitudinale (26).

2. Sous-ensemble de connecteur selon la revendication 1, **caractérisé en ce que** l'évidement de logement (27) est réalisé dans l'ouverture d'enfichage (3) du logement de connecteur (2) sous la forme d'une rainure en forme de T (29) s'étendant dans la direction longitudinale (26), l'élément anti-rotation (28) pouvant être introduit, au niveau du côté d'enfichage (4) du logement de connecteur (2), dans l'évidement de logement (27) et logé dans celui-ci par complémentarité de forme.

3. Sous-ensemble de connecteur selon la revendication 1 ou 2, **caractérisé en ce que** l'élément anti-rotation (28) comprend une saillie d'encliquetage (35) et peut être fixé, par coulissement dans une direction longitudinale (26) parallèle à l'axe central (25), dans une position d'encliquetage (37), dans l'évidement de logement (27).

4. Sous-ensemble de connecteur selon la revendication 3, **caractérisé en ce que**, dans l'évidement de logement (27) du logement de connecteur (2) est disposé un élément d'insertion (38) qui interagit avec la saillie d'encliquetage (35) de l'élément anti-rotation (28) et sert de contre-pièce de la saillie d'encliquetage (36).

5. Sous-ensemble de connecteur selon la revendication 4, **caractérisé en ce que** l'élément d'insertion (38) est constitué d'une matière plastique.

6. Sous-ensemble de connecteur selon l'une des revendications précédentes, **caractérisé en ce que** l'élément anti-rotation (28) est constitué d'une pièce en tôle.

7. Sous-ensemble de connecteur selon l'une des revendications précédentes, **caractérisé en ce que** l'élément anti-rotation (28) comme une alvéole (32) avec un bride (33).

8. Sous-ensemble de connecteur selon l'une des revendications précédentes, **caractérisé en ce que** le logement de connecteur (2) est constitué d'une pièce en tôle, l'évidement de logement (27) étant formé par découpe.

9. Sous-ensemble de connecteur selon la revendication 2, **caractérisé en ce que** l'évidement de logement (27) est réalisé partiellement dans une paroi interne (39) ou dans une paroi frontale (40) du logement de connecteur (2) et la rainure en forme de T (29) est ainsi réalisé entre la paroi interne (39) et la paroi externe (41) du logement de connecteur (2).

10. Sous-ensemble de connecteur selon l'une des revendications précédentes, **caractérisé en ce que** le logement de connecteur (2) est conçu comme une partie intégrante d'un silencieux de véhicule (6).
